## Europäisches Patentamt
## European Patent Office
## Office européen des brevets

(19)

(11) Veröffentlichungsnummer: **0 075 740**
**A2**

(12) # EUROPÄISCHE PATENTANMELDUNG

(21) Anmeldenummer: **82108008.2**

(22) Anmeldetag: **31.08.82**

(51) Int. Cl.³: **G 06 F 7/50**

(30) Priorität: **30.09.81 DE 3138991**

(43) Veröffentlichungstag der Anmeldung:
**06.04.83** Patentblatt **83/14**

(84) Benannte Vertragsstaaten:
**DE FR GB**

(71) Anmelder: **SIEMENS AKTIENGESELLSCHAFT**
**Berlin und München Wittelsbacherplatz 2**
**D-8000 München 2(DE)**

(72) Erfinder: **Beifuss, Wolfgang, Dipl.-Ing.**
**Breithornstrasse 2**
**D-8000 München 83(DE)**

(54) **Digitales Rechenwerk und Verfahren zu seinem Betrieb.**

(57) Ein digitales Rechenwerk mit einer bestimmten Rechenwerk-Wortbreite, wobei die Rechenwerk-Wortbreite in Teilrechenwerk-Wortbreiten unterteilt ist, und wobei für die verschiedenen Teilrechenwerk-Wortbreiten verschiedene Teilrechenwerke vorhanden sind, soll eine wesentlich beschleunigte Übertragsbildung ermöglichen, wodurch der Rechenoperations-Durchsatz erhöht wird. Diese Aufgabe wird erfindungsgemäß dadurch gelöst, daß für jede Teilrechenwerk-Wortbreite genau zwei arithmetisch-logische Einheiten ($ALU_0$, $ALU_0'$; $ALU_1$, $ALU_1'$) vorhanden sind, wobei jeweils an der einen arithmetisch-logischen Einheit ($ALU_0'$, $ALU_1'$) ein Übertrags-Eingang "Null" und an der jeweils anderen arithmetisch-logischen Einheit ($ALU_0$, $ALU_1$) ein Übertrags-Eingang "Eins" anliegt, wobei schließlich mindestens ein Multiplexer (13; 23) für die Auswahl des den richtigen Übertrags-Eingang (30; 31) entsprechenden Ergebnisses ($Z_0$, $Z_1$; $Z_2$, $Z_3$) vorhanden ist.

FIG 1

0075740

SIEMENS AKTIENGESELLSCHAFT     Unser Zeichen
Berlin und München            VPA  81 P 7 1 5 7 E

Digitales Rechenwerk und Verfahren zu seinem Betrieb.

Die Erfindung betrifft ein digitales Rechenwerk nach dem Oberbegriff des Patentanspruchs 1.

Die Ausführung von Befehlen in digitalen Rechenwerken, vor allem arithmetische Befehle, erfordern eine Übertragsbildung (carry). Üblicherweise muß die N-te Rechenstelle auf das Ergebnis der (N-1)-ten Rechenstelle warten, um ihr Ergebnis zu berechnen (ripple carry).

Wie z.B. von D.D. Givone et al im Buch "Microprocessors/Microcomputers", McGraw-Hill Series in Electrical Engineering, 1980, S.166-172, beschrieben ist, sind digitale Rechenwerke bekannt, bei denen zur Beschleunigung des Übertrags sogenannte carry-look-ahead-Bausteine verwendet werden. Mit solchen carry-look-ahead-Bausteinen werden Voraussagen des Übertrags zwischen den einzelnen binären Stellen des digitalen Rechenwerkes getroffen. Im hinsichtlich der Rechenzeit günstigsten Fall werden bei Verwendung von carry-look-ahead-Bausteinen in einem digitalen Rechenwerk zur Ausführung einer Addition drei hintereinanderliegende Gatter-Operationszeiten benötigt, bis der jeweils gültige Übertrag vorliegt. Ein solches nach dem Stand der Technik hinsichtlich der Rechenzeit optimiertes digitales Rechenwerk ist auch noch in der Herstellung sehr teuer, soweit der Umfang der erforderlichen Gatter und die Zahl der Eingänge zu den Gattern betroffen sind.

Der vorliegenden Erfindung liegt die Aufgabe zugrunde, ein digitales Rechenwerk der eingangs genannten Art anzugeben, welches eine wesentlich beschleunigte Über-

My 1 Bla / 15.9.1981

tragsbildung ermöglicht, wodurch der Rechenoperations-durchsatz in Rechenwerken erhöht wird.

Diese Aufgabe wird erfindungsgemäß durch ein digitales Rechenwerk der eingangs genannten Art gelöst, welches die kennzeichnenden Merkmale des Anspruchs 1 aufweist. Ausgestaltungen und Vorteile der Erfindung sind in den Unteransprüchen und in der Beschreibung sowie in der Zeichnung dargestellt.

Ein erfindungsgemäßes digitales Rechenwerk erhöht den Rechenoperationsdurchsatz und verringert die Herstellungskosten gegenüber bekannten digitalen Rechenwerken.

Ausführungsbeispiele der Erfindung sind in der Zeichnung dargestellt und werden im folgenden näher beschrieben.

Fig.1 zeigt ein erfindungsgemäßes digitales Rechenwerk.

Fig.2 zeigt ein Beispiel für eine Rechenoperation mit einem erfindungsgemäßen digitalen Rechenwerk.

Fig.3 zeigt die Ausnutzung eines erfindungsgemäßen digitalen Rechenwerks für Sicherheitszwecke.

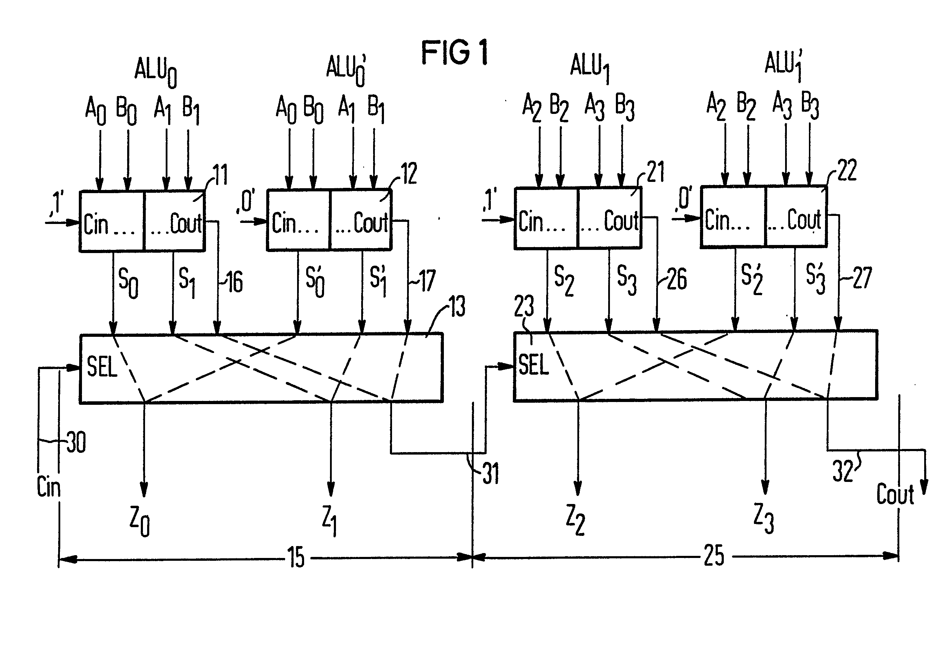

Fig.1 zeigt ein Blockschaltbild für ein erfindungsgemäßes digitales Rechenwerk. Die Rechenwerk-Wortbreite dieses digitalen Rechenwerks beträgt 4 Bit. Die Rechenwerk-Wortbreite ist in Teilworte von je 2 Bit zerlegt. Diese Teilworte werden von den Teilrechenwerken 15,25 bearbeitet, welche jeweils zwei arithmetisch-logische Einheiten $ALU_0$, $ALU_0'$ bzw. $ALU_1$, $ALU_1'$ aufweisen. Die arithmetisch-logischen Einheiten $ALU_0$, $ALU_1$ beginnen ihre Rechenoperationen so, als wäre ihr Übertrags-Eingang gleich "Eins", die arithmetisch-logischen Einheiten $ALU_0'$, $ALU_1'$

0075740

81 P 7157 E

beginnen ihre Rechenoperationen so, als wäre ihr Übertrags-Eingang gleich "Null". An den arithmetisch-logischen Einheiten $ALU_0$, $ALU_0$' liegen dieselben Operanden $A_0$, $B_0$, $A_1$, $B_1$ an, an den arithmetisch-logischen Einheiten $ALU_1$, $ALU_1$' liegen ebenfalls dieselben Operanden $A_2$, $B_2$, $A_3$, $B_3$ an. Alle arithmetisch-logischen Einheiten $ALU_0$, $ALU_0$', $ALU_1$, $ALU_1$' führen ihre Rechenoperationen gleichzeitig (parallel) aus, wobei sie über ihre Teilwort-Breite den Übertrag durchlaufen (rippeln) lassen. An den Ausgängen der jeweiligen arithmetisch-logischen Einheiten liegen sodann die Ergebnisse mit einer Teilwort-Breite von 2 Bit sowie die jeweiligen zugehörigen Übertrags-Ausgänge an. Zur arithmetisch-logischen Einheit $ALU_0$ gehören die Ergebnis-Ausgänge $S_0$, $S_1$ und der Übertrags-Ausgang 16, zur arithmetisch-logischen Einheit $ALU_0$' gehören die Ergebnis-Ausgänge $S_0$', $S_1$' und der Übertrags-Ausgang 17, zur arithmetisch-logischen Einheit $ALU_1$ gehören die Ergebnis-Ausgänge $S_2$, $S_3$ und der Übertrags-Ausgang 26, zur arithmetisch-logischen Einheit $ALU_1$' gehören die Ergebnis-Ausgänge $S_2$', $S_3$' und der Übertrags-Ausgang 27. Über den Multiplexer 13 wird beim Teilrechenwerk 15 von den parallelen arithmetisch-logischen Einheiten $ALU_0$, $ALU_0$' dasjenige Ergebnis ausgewählt, welches dem Übergangs-Eingang 30 entspricht. Wenn das in Fig.1 dargestellte digitale Rechenwerk Teil eines digitalen Rechenwerks mit einer Wortlänge von mehr als 4 Bit ist, entspricht der Übertrags-Eingang 30 dem Übertrags-Ausgang vom vorherigen Teilrechenwerk. Der Übertrags-Eingang 30 liegt am Auswahl-Eingang SEL des Multiplexers 13 an. Das dem Übertrags-Eingang 30 nicht entsprechende Ergebnis der arithmetisch-logischen Einheit $ALU_0$, $ALU_0$' wird verworfen. Das dem Übertrags-Eingang 30 entsprechende richtige Teilrechenwerk-Ergebnis ist an den Ausgängen $Z_0$, $Z_1$ des Teilrechenwerks 15 dargestellt.

Das bei den arithmetisch-logischen Einheiten $ALU_0$, $ALU_0'$ des Teilrechenwerks 15 Gesagte gilt sinngemäß auch für die arithmetisch-logischen Einheiten $ALU_1$, $ALU_1'$ des Teilrechenwerks 25. An den arithmetisch-logischen Einheiten $ALU_1$, $ALU_1'$ liegen jeweils dieselben Operanden $A_2$, $B_2$, $A_3$, $B_3$ an. Das Rechenoperations-Ergebnis der arithmetisch-logischen Einheit $ALU_1$ ist an den Ausgängen $S_2$, $S_3$ dargestellt. Der Übertrags-Ausgang der arithmetisch-logischen Einheit $ALU_1$ ist 26. Das Ergebnis der arithmetisch-logischen Einheit $ALU_1'$ ist an den Ausgängen $S_2'$, $S_3'$ dargestellt. Der Übertrags-Ausgang der arithmetisch-logischen Einheit $ALU_1'$ ist 27. Über den Multiplexer 23 wird aus den Ergebnissen der arithmetisch-logischen Einheiten $ALU_1$, $ALU_1'$ dasjenige ausgewählt, welches dem Übertrags-Ausgang 31 des Teilrechenwerks 15 und damit dem Übertrags-Eingang 31 des Teilrechenwerks 25 entspricht. Das Ergebnis des Teilrechenwerks 25 ist an den Teilrechenwerks-Ausgängen $Z_2$, $Z_3$ und am Übertrags-Ausgang 32 dargestellt.

Die optimale Teilrechenwerk-Wortlänge ergibt sich als Funktion der Durchlaufzeiten einer arithmetisch-logischen Einheit und eines Multiplexers.

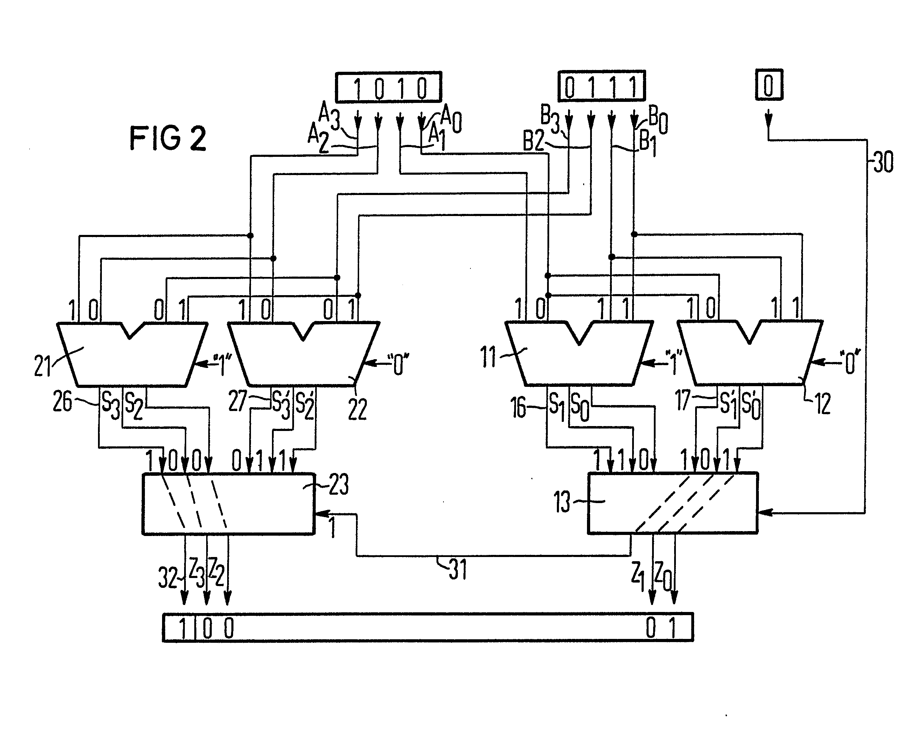

Fig.2 zeigt ein Beispiel für eine Rechenoperation mit einem erfindungsgemäßen digitalen Rechenwerk. Es werden die beiden binären Zahlen $A_3\ A_2\ A_1\ A_0$ = 1010 und $B_3\ B_2\ B_1\ B_0$ = 0111 addiert. Der Übertrags-Eingang 30 ist Null. Über den Multiplexer 13 wird das Teilrechenwerk-Ergebnis $S_1'\ S_0'$ = $Z_1\ Z_0$ = 01 ausgewählt. Der Übertrags-Eingang 31 für den Multiplexer 23 ist gleich dem Übertrags-Ausgang 17 = 1. Daher wird über den Multiplexer 23 das Teilrechenwerk-Ergebnis $S_3\ S_2$ = $Z_3\ Z_2$ = 00 ausgewählt. Der Übertrags-Ausgang 32 ist gleich dem Übertrags-Ausgang 26 = 1. Als Summe der binär darge-

stellten Zahlen $A_3$ $A_2$ $A_1$ $A_0$ = 1010 und $B_3$ $B_2$ $B_1$ $B_0$ = 0111 ergibt sich somit die Zahl 32 $Z_3$ $Z_2$ $Z_1$ $Z_0$ = 10001.

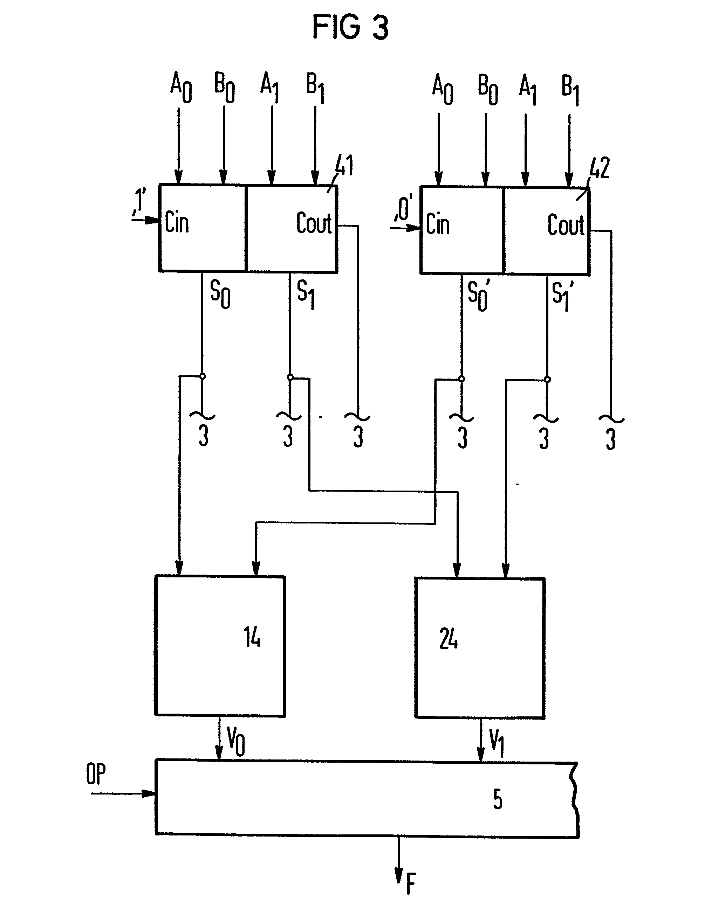

Fig.3 zeigt die Ausnutzung eines erfindungsgemäßen Rechenwerks für Sicherheitszwecke bei logischen Operationen. Die Quasi-Rechenwerks-Verdoppelung wird bei der Ausführung von logischen Befehlen für Sicherheitszwecke (Redundanz) ausgenutzt. Durch Rechenwerks-Auftrennung werden spezielle arithmetisch-logische Befehle implementiert. Fig.3 zeigt ein Teilrechenwerk mit einer Wortlänge von 2 Bit. Dieses Teilrechenwerk weist zwei parallele arithmetisch-logische Einheiten 41, 42 auf. Die arithmetisch-logische Einheit 41 führt ihre arithmetisch-logischen Operationen mit dem Übertrags-Eingang "Eins" aus und die arithmetisch-logische Einheit 42 führt ihre arithmetisch-logischen Operationen mit dem Übertrags-Eingang "Null" aus. An beiden arithmetisch-logischen Einheiten 41, 42 liegen dieselben Operanden $A_0$, $B_0$, $A_1$, $B_1$ an. Die mit 3 bezeichneten Ausgänge der beiden arithmetisch-logischen Einheiten 41, 42 können wie bei den in Fig.1 und Fig.2 beschriebenen digitalen Rechenwerken weiterverarbeitet werden. Zusätzlich werden die parallelen Ergebnisse der beiden arithmetisch-logischen Einheiten 41, 42 eines Rechenwerks bzw. Teilrechenwerks durch Vergleicher 14, 24 und Entscheider 5 auf ihre Richtigkeit hin überprüft. Die parallelen Ausgänge $S_0$, $S_0'$ bilden die beiden Vergleicher-Eingänge für den Vergleicher 14 und die parallelen Ausgänge $S_1$, $S_1'$ bilden die Vergleicher-Eingänge für den Vergleicher 24. Die Vergleicher-Ausgänge $V_0$, $V_1$ bilden die Entscheider-Eingänge für den Entscheider 5. Der Operations-Eingang OP zeigt an, ob eine arithmetische oder eine logische Operation ausgeführt wird. Am Entscheider-Ausgang F wird das Vorliegen eines Fehlers angezeigt.

Die Erfindung ist selbstverständlich nicht auf eine
Teilwortlänge von 2 Bit bzw. auf eine Wortlänge von
4 Bit beschränkt.  Ebenso wenig ist die Erfindung auf
eine Anordnung von nur zwei Teilrechenwerken beschränkt.

Patentansprüche:

1. Digitales Rechenwerk mit einer bestimmten Rechenwerk-Wortbreite, wobei die Rechenwerk-Wortbreite in Teilrechenwerk-Wortbreiten unterteilt ist, und wobei für die verschiedenen Teilrechenwerk-Wortbreiten verschiedene Teilrechenwerke vorhanden sind, dadurch g e k e n n - z e i c h n e t , daß für jede Teilrechenwerk-Wortbreite genau zwei arithmetisch-logische Einheiten ($ALU_0$, $ALU_0'$; $ALU_1$, $ALU_1'$) vorhanden sind, wobei jeweils an der einen arithmetisch-logischen Einheit ($ALU_0'$, $ALU_1'$) ein Übertrags-Eingang "Null" und an der jeweils anderen arithmetisch-logischen Einheit ($ALU_0$, $ALU_1$) ein Übertrags-Eingang "Eins" anliegt, wobei schließlich mindestens ein (13;23) Multiplexer für die Auswahl des dem richtigen Übertrags-Eingang (30; 31) entsprechenden Ergebnisses ($Z_0$, $Z_1$; $Z_2$, $Z_3$) vorhanden ist.

2. Digitales Rechenwerk nach Anspruch 1, g e k e n n - z e i c h n e t durch Vergleicher (14, 24) und Entscheider (5) zur Ausnutzung der Redundanz der doppelten arithmetisch-logischen Einheiten (41, 42) für Sicherheitszwecke.

3. Digitales Rechenwerk nach Anspruch 1 oder 2, g e - k e n n z e i c h n e t durch eine optimale Teilrechenwerk-Wortlänge.

4. Verfahren zum Betrieb eines digitalen Rechenwerks nach Anspruch 1 bis 3, dadurch g e k e n n z e i c h - n e t , daß alle arithmetisch-logischen Einheiten ($ALU_0$, $ALU_0'$; $ALU_1$, $ALU_1'$) der Teilrechenwerke (15, 25) ihre Operationen parallel ausführen.

FIG 1

FIG 2

## FIG 3